# EUROPEAN PATENT APPLICATION

(11) **EP 4 726 443 A1**
(43) Date of publication of application: **15.04.2026**
(21) Application number: 24876064.7
(22) Date of filing: 07.06.2024
(51) Int. Cl.: G02B 6/00, F21S 41/24, F21S 43/236

(54) **OPTICAL CONDUCTOR, VEHICLE LAMP MODULE, AND VEHICLE**

(30) Priority: 10.10.2023 CN 202311311022
(71) Applicant: Hasco Vision Technology Co., Ltd., Jiading District Shanghai 201821 (CN)
(72) Inventor: ZHANG, Jie, Shanghai 201821 (CN)
(74) Representative: SSM Sandmair
(86) International application number: PCT/CN2024/097998
(87) International publication number: WO 2025/077238

(57) **Abstract**

The present disclosure relates to an optical conductor, which comprises a first light incident surface, a reflecting surface corresponding to the first light incident surface, and a light emergent surface, wherein the reflecting surface extends in a preset direction, so that at least one section of the optical conductor is tapered from one end close to the first light incident surface to an opposite end, and the reflecting surface comprises a plurality of reflecting stepped surfaces that are inclined towards the light emergent surface at preset inclination angles respectively, the preset inclination angles are set such that when the optical conductor is in use, a first incident light beam is received by the first light incident surface, at least a part of the first incident light beam can be reflected by the plurality of reflecting stepped surfaces, and then exits through the light emergent surface to form emergent light beams, and the light emergent area of the emergent light beams on the light emergent surface is greater than the light incident area of the first incident light beam on the first light incident surface. In addition, the present disclosure further provides a vehicle lamp module and a vehicle. The optical conductor provided by the present disclosure can use fewer light sources to obtain larger light emergent area that meets the requirement as stipulated in applicable laws and regulations.

## Description

### CROSS REFERENCE TO RELATED APPLICATIONS

The present disclosure claims the benefits of China Patent Application No. 202311311022.5 filed on Oct. 10, 2023, the content of which is incorporated herein by reference.

### FIELD

The present disclosure relates to vehicle lamps, in particular to an optical conductor. In addition, the present disclosure further relates to a vehicle lamp module and a vehicle.

### BACKGROUND

As common optical components, optical conductors are widely applied in the optical systems of vehicle lamps. Optical conductors have elongated light emergent surfaces, fashionable shapes and flexible structural arrangements. Optical conductors in the prior art are usually used for signal lamp functions, such as steering lamps, position lamps, daytime running lights, etc. An optical conductor is provided with a light source and a necessary light collimation structure or optical component arranged at a side end or on a rear part of the optical conductor, and light is transmitted inside the optical conductor and then exits the optical conductor through a light emergent surface, thus forming an illumination field and light energy distribution, so that signal lamp functions are realized.

However, in order to meet the requirement for the light-emitting area of a signal lamp as stipulated in applicable laws and regulations, a large number of light sources have to be arranged with the existing technology, thus resulting in clumsy vehicle lamp structures and large vehicle lamp sizes. That fact has become a technical problem in the art. In addition, in the prior art, generally only one light incidence mode is adapted, e.g., side light incidence or rear light incidence, and the optical conductor can't be used in combination with different illumination systems, i.e., an optical conductor can't guide the emergent lights from different illumination systems at the same time. The two limitations result in a low utilization ratio of the optical conductor and waste of the internal space of the vehicle lamp, which are not conducive to the installation of the vehicle lamp on a vehicle and the design of the vehicle lamp.

In view of the above-mentioned problems, it is desirable to design an optical conductor that can overcome the above technical problems and effectively solve or alleviate the above technical defects.

### SUMMARY

A technical problem to be solved by the present disclosure is to provide an optical conductor, which can reduce the number of required light sources while making the light emergent area meet the requirement as stipulated in applicable laws and regulations.

Furthermore, a technical problem to be solved is to provide a vehicle lamp module, which has light emergent area that meets the requirement as stipulated in applicable laws and regulations, and requires fewer light sources.

In order to solve the above technical problems, the present disclosure provides an optical conductor, which comprises a first light incident surface, a reflecting surface corresponding to the first light incident surface, and a light emergent surface, wherein the reflecting surface extends in a preset direction, so that at least one section of the optical conductor is tapered from one end close to the first light incident surface to an opposite end, and the reflecting surface comprises a plurality of reflecting stepped surfaces that are inclined towards the light emergent surface at preset inclination angles respectively, the preset inclination angles are set such that when the optical conductor is in use, a first incident light beam is received by the first light incident surface, at least a part of the first incident light beam can be reflected by the plurality of reflecting stepped surfaces, and then exits through the light emergent surface to form emergent light beams, and the light emergent area of the emergent light beams on the light emergent surface is greater than the light incident area of the first incident light beam on the first light incident surface.

Preferably, the light emergent surface is a stepped surface.

Preferably, the light emergent surface is a planar surface or smooth curved surface.

Preferably, the reflecting stepped surfaces are fully reflecting stepped surfaces.

Preferably, the optical conductor further comprises a second light incident surface, which receives a second incident light beam when the optical conductor is in use, and the second incident light beam is refracted by the second light incident surface and the light emergent surface, and then exits through the light emergent surface.

Further preferably, the second light incident surface comprises a plurality of light incident stepped surfaces, which are fitted and connected with the reflecting stepped surfaces correspondingly, so that the plurality of light incident stepped surfaces and the plurality of reflecting stepped surfaces are fitted to form a stepped structure.

Still further preferably, an included angle between the light incident stepped surfaces and the reflecting stepped surfaces is set to a preset angle, so that when the optical conductor is in use, the first incident light beam incoming through the first light incident surface can reach the reflecting surface without being blocked by the second light incident surface.

Particularly optionally, there are a plurality of second light incident surfaces, a plurality of first light incident surfaces, and a plurality of reflecting surfaces that are fitted with the first light incident surfaces.

Preferably, the optical conductor is provided with a local hollowed-out area therein.

Particularly optionally, the local hollowed-out area is provided with a parabolic fully reflecting stepped surface that is fitted with the first light incident surface and/or a convex lens curved surface that is fitted with the second light incident surface.

Particularly optionally, the reflecting stepped surfaces are parabolic fully reflecting stepped surfaces and/or the light incident stepped surfaces are convex lens curved surfaces.

Based on the above-mentioned technical scheme of the optical conductor, the present disclosure provides a vehicle lamp module, which comprises any of the optical conductors described above and at least one primary optical system, wherein the primary optical system is configured to emit a light beam to a light incident part corresponding to the optical conductor.

Preferably, the at least one primary optical system is at least one of a high-beam illumination system, a low-beam illumination system, and a signal lamp system.

Based on the above-mentioned vehicle lamp module, the present disclosure provides a vehicle, which includes any of the above-mentioned vehicle lamp modules.

With the above technical scheme, the optical conductor in the present disclosure is innovatively configured so that the reflecting surface extends in a preset direction, thereby at least one section of the optical conductor in the present disclosure is tapered from one end close to the first light incident surface to the opposite end, and the reflecting surface comprises a plurality of reflecting stepped surfaces that are inclined towards the light emergent surface at preset inclination angles respectively; since a plurality of reflecting stepped surfaces are arranged at intervals on the bevel edge of the tapered shape and the reflecting stepped surfaces in the present application are inclined towards the light emergent surface at preset inclination angles, the emergent light beam formed after the first incident light beam is reflected by the plurality of reflecting stepped surfaces and exits through the light emergent surface has a wider range of irradiation that the emergent light beam formed in the prior art, and the light emergent area meets the requirement as stipulated in applicable laws and regulations.

In a further preferred embodiment, the optical conductor in the present disclosure is provided with a second light incident surface, the first light incident surface and the second light incident surface can guide lateral incident light and rear incident light respectively, thereby the space of the optical conductor can be fully utilized; in addition, both the first light incident surface and the second light incident surface may be provided with one or more of primary optical systems, and the optical conductor in the present application can guide the light beams produced by different primary optical systems, thereby the integration of different optical systems can be realized.

Other features and advantages of the embodiments of the present disclosure will be described in detail below in specific embodiments.

### BRIEF DESCRIPTION OF THE DRAWINGS

Fig. 1 is a schematic structural diagram of the optical conductor according to an embodiment of the present disclosure;
Fig. 2 is a diagram illustrating the optical path formed in the optical conductor according to the embodiment of the present disclosure when the optical conductor is subjected to parallel light incidence;
Fig. 3 is a schematic structural diagram of the vehicle lamp module according to an embodiment of the present disclosure;
Fig. 4 is a diagram illustrating the optical path formed in the vehicle lamp module according to the embodiment of the present disclosure when the first light incident surface is subjected to parallel light incidence;
Fig. 5 is a diagram illustrating the optical path formed in the vehicle lamp module according to the embodiment of the present disclosure when the second light incident surface is subjected to parallel light incidence;
Fig. 6 is a diagram illustrating the optical path formed in the vehicle lamp module according to the embodiment of the present disclosure when the first light incident surface and the second light incident surface are subjected to parallel light incidence;
Fig. 7 is a diagram illustrating the optical path formed in the vehicle lamp module according to another embodiment of the present disclosure when the first light incident surface and the second light incident surface are subjected to parallel light incidence;
Fig. 8 is a diagram illustrating the light pattern of an illumination spot formed by a single light source in combination with a condenser in the vehicle lamp module according to an embodiment of the present disclosure;
Fig. 9 is a structural diagram the vehicle lamp module according to an embodiment of the present disclosure when the second light incident surface guides a low illumination beam and a light-dark cutoff line structure is arranged above;
Fig. 10 is a diagram illustrating the light path on the vertical section at the second light incident surface in Fig. 9;
Fig. 11 is a diagram illustrating the light pattern of the low illumination beam formed in Fig. 9;
Fig. 12 is a structural diagram the vehicle lamp module according to an embodiment of the present disclosure when the second light incident surface guides a low illumination beam and a light-dark cutoff line structure is arranged below;
Fig. 13 is a diagram illustrating the light path on the vertical section at the second light incident surface in Fig. 12;
Fig. 14 is a diagram illustrating the light pattern of the low illumination beam formed in Fig. 12;
Fig. 15 is a diagram illustrating the light path form in the vehicle lamp module according to another embodiment of the present disclosure when the vehicle lamp module is subjected to divergent beam incidence;
Fig. 16 is a top view of the structure in Fig. 15;
Fig. 17 is a diagram illustrating the light path form in the vehicle lamp module according to an embodiment of the present disclosure when the vehicle lamp module is subjected to divergent beam incidence.

### Reference Numerals

| | | | |
|---|---|---|---|
| 1 - | first light incident surface | 2 - | reflecting surface |
| 3 - | light emergent surface | 4 - | reflecting stepped surface |
| 5 - | second light incident surface | 6 - | light incident stepped surface |
| 7 - | first incident light beam | 8 - | second incident light beam |
| 9 - | emergent light beam | 10 - | optical conductor |
| 11 - | light source | 12 - | parabolic reflecting surface |
| 13 - | collimation surface | 14 - | parabolic fully reflecting stepped surface |
| 15 - | convex lens curved surface | | |

### DETAILED DESCRIPTION

Specific embodiments of the present disclosure will be detailed below with reference to the accompanying drawings. It may be understood that the embodiments described herein are only provided to describe and explain the present disclosure, but are not intended to constitute any limitation on the present disclosure.

In the present disclosure, unless otherwise specified, the orientational terms "top", "bottom", "left", and "right" usually refer to top, bottom, left and right when the optical conductor is used normally. "Inside" and "outside" refer to the inside and outside of the contour of a related part. Terms such as "first" and "second" are used herein to distinguish one element from another, but don't imply a meaning of sequence or importance, and don't constitute any limitation on the scope of protection of the present disclosure. The "light incident area" mentioned in the present application involves two situations: in the case that the light incident surface is a planar surface, the "light incident area" refers to the area of the part of the light incident surface under the irradiation of the light beam; in the case that the light incident surface is a curved surface, the "light incident area" refers to the projection of the area of irradiation of the incident light beam on the curved surface on a plane perpendicular to the normal of the light incident surface. The "light emergent area" mentioned in the present application involves two situations: in the case that the light emergent surface is a planar surface, the "light emergent area" refers to the area of the part of the light emergent surface under the irradiation of the emergent light beam; in the case that the light emergent surface is a curved surface, the "light emergent area" refers to the projection of the area of irradiation of the emergent light beam on the curved surface on a plane perpendicular to the normal of the light emergent surface. In addition, "parallel" mentioned in the present application doesn't mean parallelism in an absolute sense.

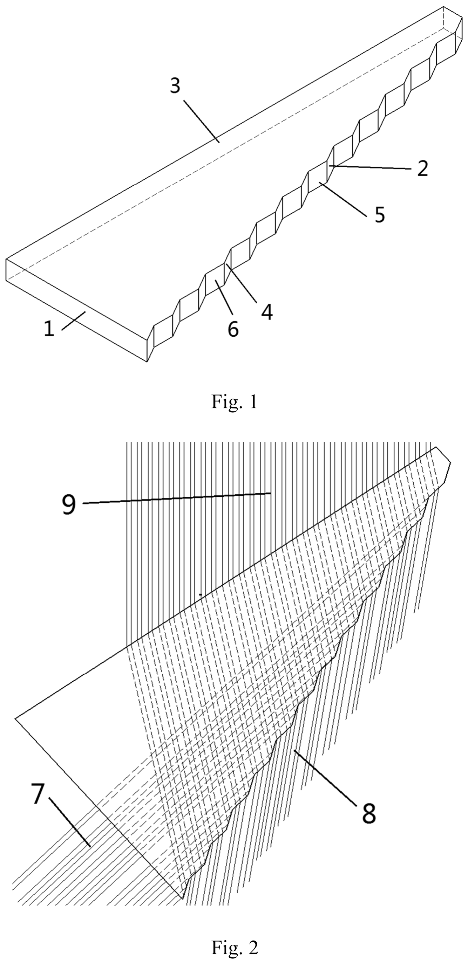

As shown in Fig. 1, an optical conductor is provided in the present application. The optical conductor comprises a first light incident surface 1, a reflecting surface 2 corresponding to the first light incident surface 1, and a light emergent surface 3, wherein the reflecting surface 2 extends in a preset direction, so that at least one section of the optical conductor is tapered from one end close to the first light incident surface 1 to an opposite end, and the reflecting surface 2 comprises a plurality of reflecting stepped surfaces 4 that are inclined towards the light emergent surface 3 at preset inclination angles respectively, the preset inclination angles are set such that when the optical conductor is in use, a first incident light beam 7 is received by the first light incident surface 1, at least a part of the first incident light beam 7 can be reflected by the plurality of reflecting stepped surfaces 4, and then exits through the light emergent surface 3 to form emergent light beams 9, and the light emergent area of the emergent light beams 9 on the light emergent surface 3 is greater than the light incident area of the first incident light beam 7 on the first light incident surface 1.

In the above basic embodiment, the tapered shape may comprise a cone shape and a frustum shape. For example, as shown in Fig. 1, a preferred cone-shaped or frustum-shaped optical conductor may be configured to have a straight surface on one side and a bevel surface on the other side. In the case that the optical conductor is configured into a cone shape, the reflecting stepped surfaces 4 may be arranged at intervals along the bevel surface of the cone, and the first incident light beam 7 incomes from the first light incident surface 1, is reflected by the plurality of reflecting stepped surfaces 4 arranged at intervals in the preset direction and forms reflected beams wider than the first incident light beam 7, and these reflected beams exit through the light emergent surface 3 to form an emergent light beam 9. These reflecting stepped surfaces 4 that are arranged at intervals in an extended form enable the emergent light beam 9 to have a greater range of irradiation. In the case that the optical conductor is configured into a frustum shape, as shown in Fig. 2, the reflecting stepped surfaces 4 may be arranged on the side surface of the frustum. The first incident light beam 7 incomes from the first light incident surface 1, is reflected the plurality of reflecting stepped surfaces 4 that are arranged at intervals in a preset direction and forms reflected beams wider than the first incident light beam 7, and these reflected beams exit through the light emergent surface 3 and form an emergent light beam 9. These reflecting stepped surfaces 4 that are arranged at intervals in an extended form enable the emergent light beam 9 to have a greater range of irradiation; in addition, as shown in Fig. 2, by setting the inclination angle of the reflecting stepped surfaces 4 towards the light emergent surface 3 as a preset inclination angle, the light emergent area of the emergent light beam 9 on the light emergent surface 3 is greater than the light incident area of the first incident light beam 7 on the first light incident surface 1, and the light beam emitted by one light source can correspond to a plurality of reflecting stepped surfaces 4, so that the optical conductor in the present application can use fewer light sources and meet the requirement for greater light-emitting area of the signal lamp as stipulated in applicable laws and regulations.

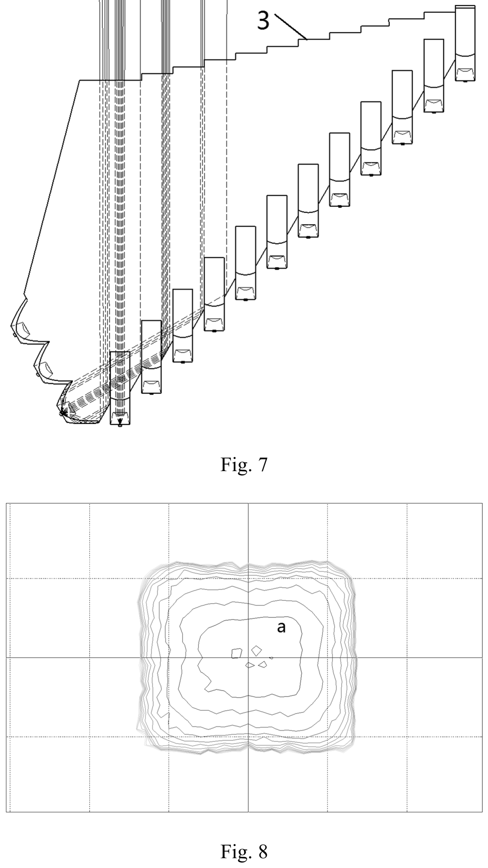

As a preferred embodiment, as shown in Fig. 7, the light emergent surface 3 may be a stepped surface, thus the weight of the optical conductor can be reduced. Moreover, since a lens will be installed at the light emergent surface 3 of the optical conductor when the optical conductor is installed on a vehicle, the inclination of the light emergent surface can be increased and the interference in assembly caused by the optical conductor can be reduced by configuring the light emergent surface 3 into a stepped surface.

As a preferred embodiment, the light emergent surface 3 may be a planar surface or a smooth curved surface, so as to avoid a severe effect of the light emergent surface 3 on the light pattern.

As a preferred embodiment, the reflecting stepped surface 4 may be a fully reflecting stepped surface, so that the light beam can be fully reflected by the reflecting stepped surfaces 4 and the light efficiency can be improved.

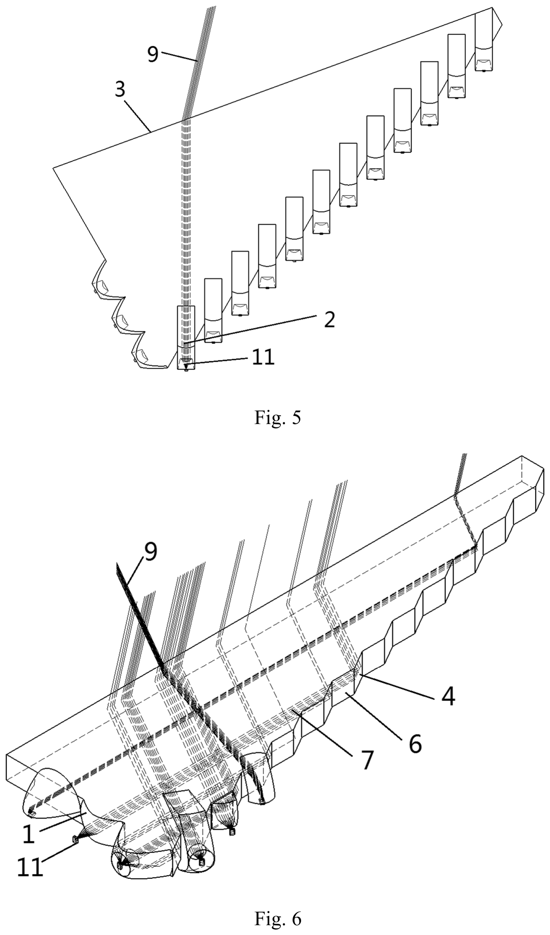

As a preferred embodiment, as shown in Fig. 1, the optical conductor further comprises a second light incident surface 5, which receives a second incident light beam 8 when the optical conductor is in use, and the second incident light beam 8 is refracted by the second light incident surface 5 and the light emergent surface 3, and then exits through the light emergent surface 3. As shown in Fig. 5, compared with an existing optical conductor into which an illuminating light beam incomes only from a side part or a rear part, the optical conductor in the present application can be adapted to both side light incidence and rear light incidence, and different primary optical systems can be arranged on the first light incident surface 1 and the second light incident surface 5, so that different light beams can exit the light emergent surface 3 of the optical conductor, and multiple illumination light patterns can be provided by means of a separate optical system, thus utilization efficiency of the optical conductor is improved.

As a specific embodiment, as shown in Fig. 1, the second light incident surface 5 comprises a plurality of light incident stepped surfaces 6, which are fitted and connected with the reflecting stepped surfaces 4 correspondingly, so that the plurality of light incident stepped surfaces 6 and the plurality of reflecting stepped surfaces 4 are fitted to form a stepped structure. By arranging a plurality of light incident stepped surfaces 6, the clearance between the reflecting stepped surfaces 4 is fully utilized, thereby the space utilization efficiency of the optical conductor is improved on the basis of adapting to a variety of light incident modes.

As a preferred embodiment, as shown in Fig. 6, an included angle between the light incident stepped surfaces 6 and the reflecting stepped surface 4 is set to a preset angle, so that the light beam incoming from the first light incident surface 1 can reach the reflecting surface 2 without being blocked by the second light incident surface 5 when the optical conductor is used, and the effect of the light incident stepped surfaces 6 on the first incident light beam 7 is reduced.

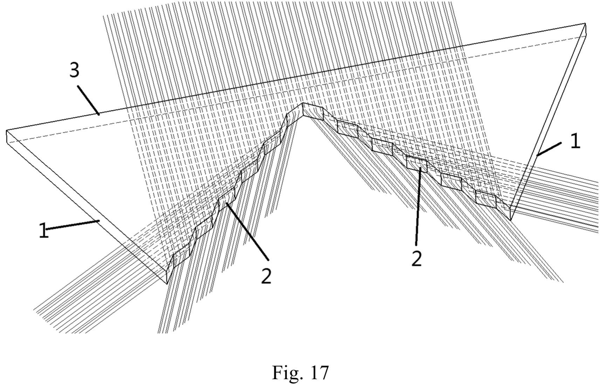

As a specific embodiment, as shown in Fig. 17, the optical conductor in this embodiment comprises two first light incident surfaces 1 and two second light incident surfaces 5 that are integrated and symmetrical, and one light emergent surface 3; two reflecting surfaces 2 extend in their respective preset directions to form two tapered shapes that are symmetrical, and each of the two first reflecting surfaces 2 comprises a plurality of reflecting stepped surfaces 4 that are inclined towards the light emergent surface 3 at a preset inclination angle respectively, so that the emergent light beams 9 correspondingly formed from the two first light incident surfaces 1 have greater light emergent area on the light emergent surface 3, and different primary optical systems can be arranged at the first light incident surfaces 1 and the second light incident surfaces 5 so that a variety of emergent light patterns can be formed through a single optical conductor. Under the technical enlightenment of the present disclosure, those having ordinary skills in the art can conceive that a plurality of first light incident surfaces 1, a plurality of second light incident surfaces 5 and a plurality of light emergent surfaces 3 can be arranged provided that there is no mutual interference, so that the optical conductor can receive incident light beams in more directions, and the optical system formed by the optical conductor can provide more light patterns.

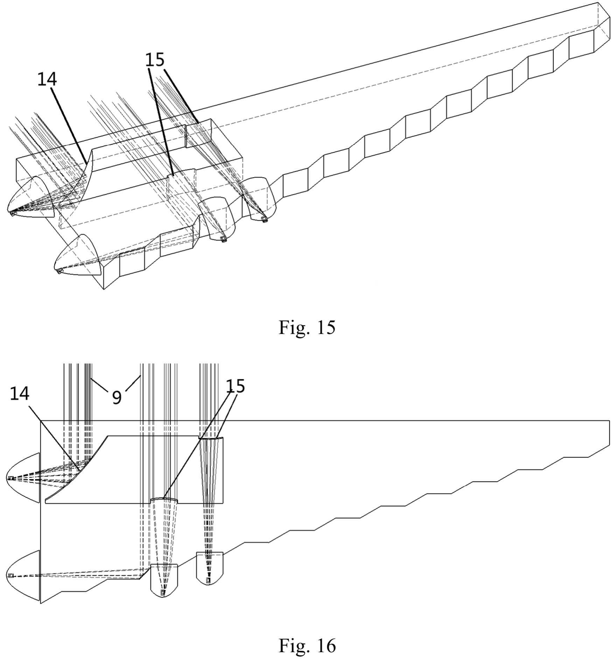

As a preferred embodiment, as shown in Fig. 15, the optical conductor is provided with a local hollowed-out area therein, so as to reduce the weight of the optical conductor.

As a further preferred embodiment, as shown in Figs. 15 and 16, a parabolic fully reflecting stepped surface 14 fitted with the first light incident surface 1 and/or a convex lens curved surface 15 fitted with the second light incident surface 5 may be arranged in the local hollowed-out area, so that the divergent light beam of the light source 11 can be collimated in the optical conductor, and the corresponding primary optical system doesn't need a collimator. The light source 11 is arranged at or in the vicinity of the focal point of the parabolic fully reflecting stepped surface 14 or the convex lens curved surface 15, collimation is directly completed by means of the parabolic fully reflecting stepped surface 14 or the convex lens curved surface 15 of the optical conductor in the preferred embodiment, and finally an emergent light beam 9 is formed. Thus, the optical system is further simplified, and the size of the optical system is reduced.

As a preferred embodiment, the reflecting stepped surfaces 4 may be parabolic fully reflecting stepped surfaces 14 and/or the light incident stepped surfaces 6 may be convex lens curved surfaces 15, and the divergent lights emitted from the light sources 11 arranged at or in the vicinity of the first light incident surface 1 and the second light incident surface 5 can be collimated by corresponding parabolic fully reflecting stepped surfaces 14 or convex lens curved surfaces 15, so that the primary optical system arranged on the light incident surface of the optical conductor doesn't need a collimating structure to collimate the light beams of the light sources, and the size of the optical system is reduced. It may be noted that the vicinity of the focal point of the parabolic fully reflecting stepped surface 14 or convex lens curved surface 15 refers to a range of 2 mm around the focal point.

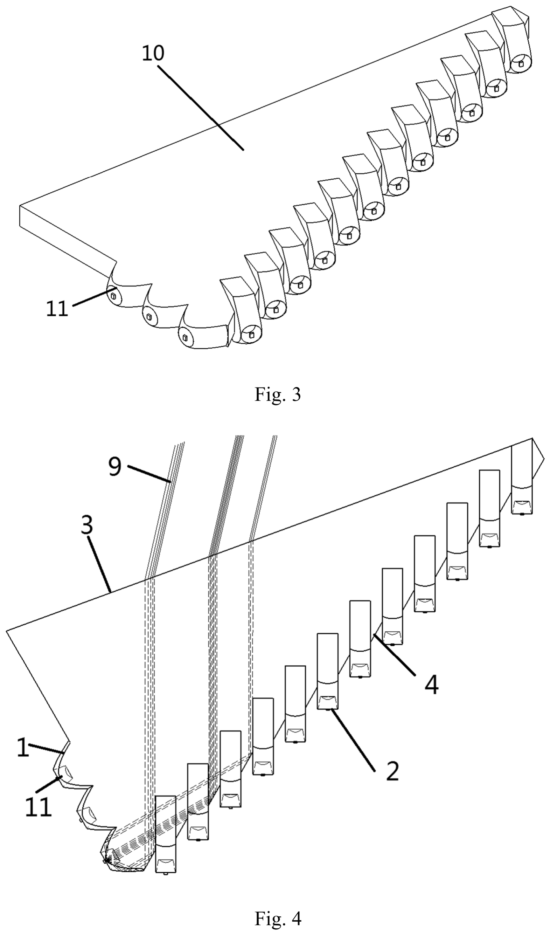

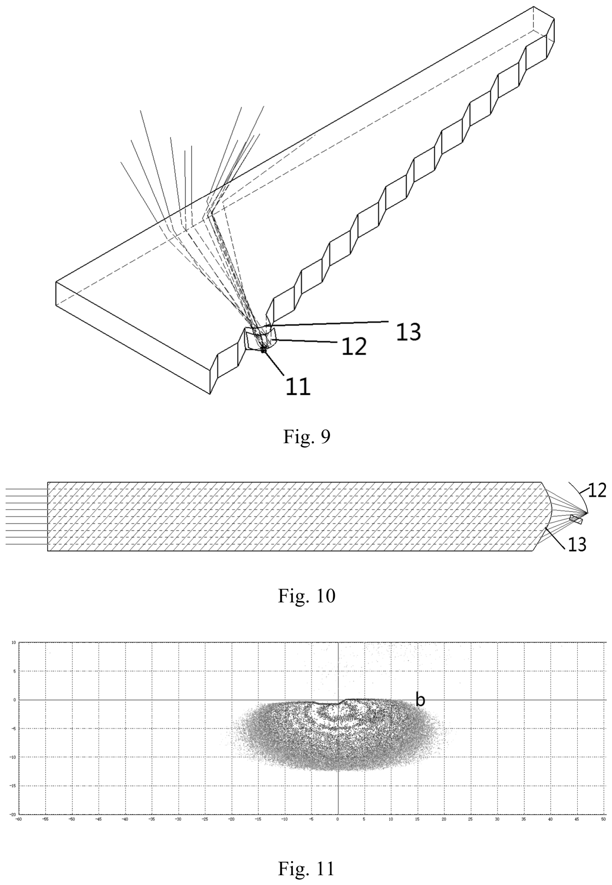

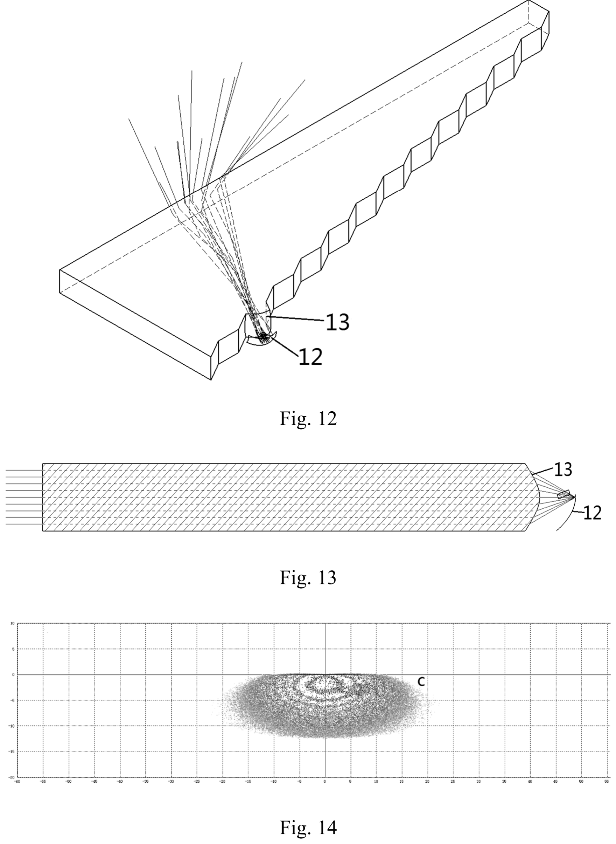

Based on the above-mentioned technical scheme of the optical conductor, the present disclosure further provides a vehicle lamp module, which comprises any of the optical conductors described above and at least one primary optical system, wherein the primary optical system is configured to emit a light beam to a light incident part corresponding to the optical conductor. As shown in Fig. 3, light sources 11 and condensers may be arranged at the first light incident surface 1 and the second light incident surface 5 of the optical conductor in the present application. As shown in Fig. 4, the condenser is configured to collimate the light beam emitted by the light source 11, and the light source 11 and the condenser are arranged in a way that the collimated parallel light beam can be incident on the plurality of reflecting stepped surfaces 4 of the optical conductor, so that the condenser arranged at the first light incident surface 1 collimates the light beam emitted by the corresponding light source 11 to form a parallel light beam. The parallel light beam incoming into the optical conductor is reflected by the plurality of reflecting stepped surfaces 4 that are arranged at intervals in a preset direction, and forms reflected light beams that are wider than the incident light beam, and these reflected light beams exit through the light emergent surface 3 and form an emergent light beam 9 having a greater range of irradiation, so that the optical conductor in the present application can realize greater light-emitting area with a single light source. The illumination light pattern formed by the light beam from a single light source combined with a condenser through the first light incident surface 1 of the optical conductor in this embodiment is shown in Fig. 8. The illumination light pattern A can be used for signal lamps and high-beam lamps. Those having ordinary skills in the art can conceive that a plurality of light sources 11 can be arranged at the light incident surface, and the light beams emitted by the plurality of light sources 11 exit through the light emergent surface 3 and form a plurality of emergent light beams 9, which can be combined with each other to form a predetermined light pattern. Besides, since the plurality of reflecting stepped surfaces 4 are arranged to be inclined towards the light emergent surface 3 at a preset angle respectively, the light emergent area of the emergent light beam 9 from the light emergent surface 3 is greater than the light incident area of the first incident light beam 7 from the first light incident surface 1; thus, the optical conductor can use fewer light sources to meet the requirement for light emergent area as stipulated in applicable laws and regulations. In addition, the optical conductor in the present application can be further provided with a primary optical system at the second light incident surface 5, as shown in Figs. 9 and 10. In this embodiment, a light source 11, a parabolic reflecting surface 12, and a light-dark cutoff line structure are arranged at the second light incident surface 5, and the corresponding light incident stepped surface 6 is configured as a collimation surface 13, the focal point of which is located in the vicinity of the boundary of the parabolic reflecting surface 12 where a light-dark cutoff line structure corresponding to the shape of the light-dark cutoff line is arranged; the focal point of the parabolic reflecting surface 12 is located at or in the vicinity of the light source 11, the light beam emitted by the light source 11 is reflected by the parabolic reflecting surface 12 and cut off partially by the cut-off line structure, and then incomes through the collimation surface 13, is collimated by the collimation surface 13, exits through the light emergent surface 3 and forms a low-beam light pattern or a part of the low-beam light pattern. The emergent light beam 9 formed in this embodiment is projected as a low-beam light pattern B as shown in Fig. 11. As a specific embodiment, as shown in Figs. 12 and 13, a light source 11 and a parabolic reflecting surface 12 are arranged at the second light incident surface 5, and the corresponding light incident stepped surface 6 is configured as a collimation surface 13, the focal point of the collimation surface 13 is arranged on the parabolic reflecting surface 12 near the light source 11, the divergent light beam emitted by the light source 11 forms a primary light pattern with a central bright spot on the parabolic reflecting surface 12, and the primary light pattern is imaged through the collimation surface 13, exits through the light emergent surface 3 and forms an emergent light beam 9, which is projected on a road surface; the emergent light beam 9 can be projected to form a signal light pattern or a high-beam light pattern, as shown in Fig. 14, which illustrates a light pattern C formed by a vehicle lamp module in this embodiment, and the light pattern C may be used as a high-beam light pattern or a signal light pattern. For the vehicle lamp module in the present application, the primary optical system may be used to collimate the divergent light beam emitted from the light source 11; or the reflecting stepped surfaces 4 may be correspondingly configured as parabolic fully reflecting stepped surfaces 14 and the light incident stepped surfaces may be configured as convex lens curved surfaces 15; or parabolic fully reflecting stepped surfaces 14 and convex lens curved surfaces 15 may be directly arranged in the local hollowed-out area of the optical conductor, and the collimation may be completed by means of the parabolic fully reflecting stepped surfaces 14 and the convex lens curved surfaces 15.

As a preferred embodiment, the at least one primary optical system comprises a high-beam illumination system, a low-beam illumination system and a signal lamp system, wherein the high-beam illumination system, the low-beam illumination system and the signal lamp system are arranged at the light incident surface of an optical conductor, so that light beams for different light patterns can be guided with one optical conductor, thereby a low-beam lamp, a high-beam lamp and a signal lamp can be integrated; in addition, an emergent light beam may be formed separately from the first light incident surface 1 with a corresponding primary optical system or the second light incident surface 5 with a corresponding primary optical system in the vehicle lamp module in the present application to form a light pattern, or emergent light beams may be formed through the light incident surface 1 with a corresponding primary optical system and the second light incident surface 5 with a corresponding primary optical system at the same time to form different light patterns, or the two emergent light beams are combined into a light beam finally and form a light pattern. Furthermore, one or more primary optical systems may be arranged at the light incident surfaces of the optical conductor in the present application.

Based on the vehicle lamp module in the above technical scheme, the present disclosure further provides a vehicle. A vehicle lamp of the vehicle comprises the vehicle lamp module described above in the present application, thus, the requirement for the light-emitting area of the emergent light beam as stipulated in applicable laws and regulations can be met with fewer light sources.

The present disclosure provides a preferred embodiment of a vehicle lamp module. As shown in Fig. 7, the vehicle lamp module comprises an optical conductor and a primary optical system. The optical conductor comprises a first light incident surface 1, a second light incident surface 5, a reflecting surface 2 corresponding to the first light incident surface 1 and a light emergent surface 3, wherein the reflecting surface 2 extends in a preset direction so that at least one section of the optical conductor is tapered in a frustum shape from one end close to the first light incident surface 1 to the opposite end; the reflecting surface 2 comprises a plurality of reflecting stepped surfaces 4 that are inclined towards the light emergent surface 3 at a preset inclination angle respectively, and the reflecting stepped surfaces 4 are arranged on a side surface of the frustum; the second light incident surface 5 comprises a plurality of light incident stepped surfaces 6, and the plurality of light incident stepped surfaces 6 and the plurality of reflecting stepped surfaces 4 are fitted to form a stepped structure; the reflecting surface 2 is a fully reflecting surface, and the light emergent surface 3 is a smooth stepped surface; thus, the first light incident surface 1 receives a first incident light beam 7 when the optical conductor is in use, and at least a part of the first incident light beam 7 is reflected by the plurality of reflecting stepped surfaces 4, and then exits from the light emergent surface 3 and forms emergent light beams 9; wherein the plurality of reflecting stepped surfaces 4 are arranged to be inclined towards the light emergent surface 3 at a preset inclination angle respectively, i.e., the area of projection of the reflecting stepped surfaces on a plane perpendicular to the emergent light beams 9 is greater than the area of projection on a plane perpendicular to the incident light beam 7, so that the light emergent area of the emergent light beams 9 through the light emergent surface 3 is greater than the light incident area of the incident light beam 7 on the first light emergent surface 1, and the angle between the light incident stepped surfaces 6 and the reflecting stepped surfaces 5 is set to a preset angle, so that the first incident light beam 7 incoming through the first light incident surface 1 can reach the reflecting surface 2 without being blocked by the second light incident surface 5 when the optical conductor is in use. The primary optical system comprises a light source 11 and a condenser. The optical conductor is adapted to different light incident modes by means of the first light incident surface 1 and the second light incident surface 5. In this embodiment, the first light incident surface 1 corresponds to a side light incidence mode, and the second light incident surface 5 corresponds to a rear light incidence mode, so as to facilitate the spatial layout of the internal structure of the vehicle lamp. A plurality of primary optical systems for forming a signal light pattern are arranged at the first light incident surface 1 of the optical conductor, and the primary optical systems at the first light incident surface 1 correspond to a plurality of reflecting stepped surfaces 4, thereby the divergent light emitted by the light source 11 of the primary optical system is converged by the condenser to form a parallel first incident light beam 7, which is incident to the first light incident surface 1 of the optical conductor. One light source 11 corresponds to a plurality of reflecting stepped surfaces 4 arranged at intervals, thereby a reflected light beam is formed by the reflection on the plurality of reflecting stepped surfaces 4 arranged at intervals, thus, the emergent light beam 9 has a greater range of irradiation; in addition, the plurality of reflecting stepped surfaces 4 are configured in a way that the area of projection on a plane perpendicular to the emergent light beam 9 is greater than the light incident area of the first incident light beam 7 incoming from the first light incident surface 1, so that the light emergent area of the emergent light beam 9 exiting through the light emergent surface 3 is greater than the light incident area of the first incident light beam 7 incoming from the first light incident surface 1, and the vehicle lamp module in the present application can use fewer light sources to enable the light-emitting area of the signal lamp pattern formed by the emergent light beam 9 corresponding to the first light incident surface to meet the requirement as stipulated in applicable laws and regulations. The light entrance stepped surface 6 of the vehicle lamp module is configured as primary optical systems for forming a high-beam pattern, and each primary optical system corresponds to a light incident stepped surface 6; the divergent light emitted by the light source 11 is converged by a condenser to form a parallel light beam, which is transmitted through the light incident stepped surfaces 6 and the light emergent surface to form an emergent light beam 9; the emergent light beam can form a high-beam illumination light pattern on a road surface; thus, the vehicle lamp module can realize the functions of a signal lamp and a high-beam lamp by means of a separate optical system; in addition, the angle between the light incident stepped surfaces 6 and the reflecting stepped surfaces 5 is set to a preset angle, so that the first incident light beam 7 is not blocked by the light incident stepped surfaces 6, and the light efficiency of the vehicle lamp module is increased. Furthermore, the reflecting surface 2 is configured as a fully reflecting surface, so that the first incident light beam 7 can be fully reflected by the reflecting surface 2 to the light emergent surface 3, thereby the light efficiency of the vehicle lamp module is improved; the light emergent surface 3 is configured in a smooth stepped surface, thereby the effect of the light emergent surface 3 on the light beam is reduced when the light beam is transmitted out of the light emergent surface 3; by configuring the light emergent surface 3 into a stepped surface, the weight of the vehicle lamp can be reduced, and the stepped surface can increase the inclination of the light emergent surface 3 and reduce the interference on the assembly when the vehicle lamp is assembled.

As can be seen from the above description, to sum up, the advantages of the present disclosure include: firstly, the optical conductor can increase the range of irradiation, so that the light-emitting area of the emergent light beam can meet the requirement as stipulated in applicable laws and regulations with fewer light sources. Secondly, the optical conductor can be adapted to different light incident modes, such as side light incidence and rear light incidence. Thirdly, the optical conductor can guide the light beams generated by different primary optical systems to form different light patterns, so that the vehicle lamp module can realize the integration of a high-beam lamp, a low-beam lamp, and a signal lamp. Fourthly, the light beam emitted from the light source can be collimated directly through the optical conductor, thereby the size of the vehicle lamp module can be reduced.

While some preferred embodiments of the present disclosure are described above with reference to the accompanying drawings, the present disclosure is not limited to the details in those embodiments. Those skilled in the art can make various simple modifications and variations to the technical scheme of the present disclosure without departing from the technical concept of the present disclosure. However, all these simple modifications and variations shall be deemed as falling in the scope of protection of the present disclosure.

In addition, it may be noted that the specific technical features described in the above embodiments can be combined in any suitable way, provided that there is no contradiction among them. To avoid unnecessary repetitions, various possible combinations are not described specifically in the present disclosure.

Moreover, different embodiments of the present disclosure may also be combined freely as required, as long as the combinations don't deviate from the ideal of the present disclosure. However, such combinations shall also be deemed as being disclosed in the present disclosure.

## Claims

1. An optical conductor, comprising a first light incident surface (1), a reflecting surface (2) corresponding to the first light incident surface (1), and a light emergent surface (3), wherein the reflecting surface (2) extends in a preset direction, so that at least one section of the optical conductor is tapered from one end close to the first light incident surface (1) to an opposite end, and the reflecting surface (2) comprises a plurality of reflecting stepped surfaces (4) that are inclined towards the light emergent surface (3) at preset inclination angles respectively, the preset inclination angles are set such that when the optical conductor is in use, a first incident light beam (7) is received by the first light incident surface (1), at least a part of the first incident light beam (7) can be reflected by the plurality of reflecting stepped surfaces (4), and then exits through the light emergent surface (3) to form emergent light beams (9), and the light emergent area of the emergent light beams (9) on the light emergent surface (3) is greater than the light incident area of the first incident light beam (7) on the first light incident surface (1).

2. The optical conductor of claim 1, wherein the light emergent surface (3) is a stepped surface.

3. The optical conductor of claim 1, wherein the light emergent surface (3) is a planar surface or a smooth curved surface.

4. The optical conductor of claim 1, wherein the reflecting stepped surfaces (4) are fully reflecting stepped surfaces.

5. The optical conductor of any of claims 1 to 4, further comprising a second light incident surface (5), which receives a second incident light beam (8) when the optical conductor is in use, and the second incident light beam (8) is refracted by the second light incident surface (5) and the light emergent surface, and then exits through the light emergent surface (3).

6. The optical conductor of claim 5, wherein the second light incident surface (5) comprises a plurality of light incident stepped surfaces (6), which are fitted and connected with the reflecting stepped surfaces (4) correspondingly, so that the plurality of light incident stepped surfaces (6) and the plurality of reflecting stepped surfaces (4) are fitted to form a stepped structure.

7. The optical conductor of claim 6, wherein an included angle between the light incident stepped surfaces (6) and the reflecting stepped surfaces (4) is set to a preset angle, so that when the optical conductor is in use, the first incident light beam (7) incoming through the first light incident surface (1) can reach the reflecting surface (2) without being blocked by the second light incident surface (5).

8. The optical conductor of claim 5, wherein there are a plurality of second light incident surfaces (5), a plurality of first light incident surfaces (1), and a plurality of reflecting surfaces (2) that are fitted with the first light incident surfaces (1).

9. The optical conductor of claim 7, wherein the optical conductor is provided with a local hollowed-out area therein.

10. The optical conductor of claim 9, wherein the local hollowed-out area is provided with a parabolic fully reflecting stepped surface that is fitted with the first light incident surface (1) and/or a convex lens curved surface that is fitted with the second light incident surface (5).

11. The optical conductor of claim 6, wherein the reflecting stepped surfaces (4) are parabolic fully reflecting stepped surfaces and/or the light incident stepped surfaces (6) are convex lens curved surfaces.

12. A vehicle lamp module, comprising the optical conductor of any of claims 1 to 11 and at least one primary optical system, wherein the primary optical system is configured to emit a light beam to a light incident part corresponding to the optical conductor.

13. The vehicle lamp module of claim 12, wherein the at least one primary optical system is at least one of a high-beam illumination system, a low-beam illumination system, and a signal lamp system.

14. A vehicle, comprising the vehicle lamp module of claim 12 or 13.
